# EUROPEAN PATENT SPECIFICATION

(11) **EP 3 608 788 B1**
(45) Date of publication and mention of the grant of the patent: **13.09.2023**
(21) Application number: 18790799.3
(22) Date of filing: 27.04.2018
(51) Int. Cl.: G06F 12/08, G06F 3/06, G06F 12/1036

(54) **INTERNAL MEMORY ACCESS METHOD AND COMPUTER SYSTEM**
INTERNES SPEICHERZUGRIFFSVERFAHREN UND COMPUTERSYSTEM
PROCÉDÉ D'ACCÈS À UNE MÉMOIRE INTERNE ET SYSTÈME INFORMATIQUE

(30) Priority: 27.04.2017 CN 201710289650
(43) Date of publication of application: 12.02.2020
(73) Proprietor: Huawei Technologies Co., Ltd., Longgang District Shenzhen, Guangdong 518129 (CN); Huazhong University of Science and Technology, Wuhan City Hubei 430074 (CN)
(72) Inventor: LIU, Haikun, Shenzhen Guangdong 518129 (CN); CHEN, Ji, Shenzhen Guangdong 518129 (CN); YU, Guosheng, Shenzhen Guangdong 518129 (CN)
(74) Representative: Körber, Martin Hans
(86) International application number: PCT/CN2018/084777
(87) International publication number: WO 2018/196839

(56) References cited:
- WO-A1-2016/122546
- CN-A- 103 198 028
- CN-A- 106 560 798
- US-A- 5 479 627
- US-A1- 2015 199 126
- US-A1- 2017 371 912
- NEHA AGARWAL ET AL: "Thermostat : Application-transparent Page Management for Two-tiered Main Memory", ARCHITECTURAL SUPPORT FOR PROGRAMMING LANGUAGES AND OPERATING SYSTEMS, 1 January 2017 (2017-01-01), pages 631-644, XP55674816, 2 Penn Plaza, Suite 701 New York NY 10121-0701 USA DOI: 10.1145/3037697.3037706 ISBN: 978-1-4503-4465-4
- BOCK SANTIAGO ET AL: "Concurrent Migration of Multiple Pages in software-managed hybrid main memory", 2016 IEEE 34TH INTERNATIONAL CONFERENCE ON COMPUTER DESIGN (ICCD), IEEE, 2 October 2016 (2016-10-02), pages 420-423, XP033004091, DOI: 10.1109/ICCD.2016.7753318 [retrieved on 2016-11-22]
- GUILHERME COX ET AL: "Efficient Address Translation for Architectures with Multiple Page Sizes", ACM SIGPLAN NOTICES, ACM, 2 PENN PLAZA, SUITE 701 NEW YORK NY 10121-0701 USA, vol. 52, no. 4, 4 April 2017 (2017-04-04), pages 435-448, XP058338266, ISSN: 0362-1340, DOI: 10.1145/3093336.3037704

## Description

### TECHNICAL FIELD

This application relates to the field of computer technologies, and in particular, to a memory access method and a computer system.

### BACKGROUND

A memory is usually implemented by a dynamic random access memory (Dynamic Random Access Memory, DRAM). However, the DRAM has disadvantages of a low storage density and a small storage capacity. Therefore, a nonvolatile memory (Nonvolatile Memory, NVM) may be introduced based on the DRAM to form a hybrid memory, so as to expand the memory capacity. A read/write speed of the NVM is slower than a read/write speed of the DRAM, and write endurance of the NVM is also shorter than write endurance of the DRAM. In this case, to increase a memory access speed and a service life of the hybrid memory, a frequently written/read storage block in the NVM is usually migrated to the DRAM.

A computer system performs conversion between a virtual memory and a physical memory by using a translation lookaside buffer (Translation Lookaside Buffer, TLB). To increase a hit probability in the TLB and improve address translation efficiency, a physical page of the memory is usually set to a large page, such as 2M. When the hybrid memory and a physical large page are combined for use, a physical large page of the NVM needs to be replaced with a plurality of physical small pages, and a frequently written/read physical small page is migrated to the DRAM. However, a granularity of memory addressing performed by the computer system changes from a physical large page to a physical small page. Consequently, a probability that a mapping between a virtual address and a physical address is hit in the TLB is reduced, and address translation performance is reduced.

Neha Agarwal et al. "Thermostat: Application-transparent Page Management for Two-tiered Memory, Architectural support for programming languages and operating systems" 2017 relates to online page classification mechanism that classifies both 4 KB and 2 MB pages as hot or cold while incurring no observable performance overhead across several representative cloud application. WO 2016/122546 A1 discloses example implementations used to build, maintain, and access databases built a database in multi-core computing systems with large VRAM and huge NVRAM. The database with optimistic concurrency control can be built on a transactional key-value data store that includes logically equivalent data pages stored in both VRAM and VRAM. Data records in volatile data pages in the VRAM represent the most recent version of the data. Data records in the NVRAM immutable and are organized in a stratified composite snapshot. A distributed log gleaner process is used to process log entries corresponding to transactions on the volatile data pages and construct the snapshot. The log gleaner sorts the log entries by epoch, key range, and most recent use to partition the snapshot across multiple nodes.

### SUMMARY

The invention is defined by the claims. The dependent claims define particular embodiments.

Embodiments of this application provide a memory access method according to independent claim 1, a computer system according to independent claim 4, and a memory access apparatus according to independent claim 7, so as to ensure a memory hit rate when some data in a large page is migrated. Additional features of the invention are presented in the dependent claims. In the following, parts of the description and drawings referring to embodiments, which are not covered by the claims are not presented as embodiments of the invention, but as examples useful for understanding the invention.

According to a first aspect, an embodiment of this application provides a memory access method, where the memory access method is applied to a computer system that includes a hybrid memory, the hybrid memory includes a first memory and a second memory, and the first memory is a nonvolatile memory. The memory access method includes the following steps: First, a memory management unit (memory management unit, MMU) receives a first access request, where the access request comprises a first virtual address; then, the MMU translates the first virtual address into a first physical address according to a first page table buffer in the computer system, where the first physical address is a physical address of a first large page in the first memory, and the first large page includes a plurality of small pages; then, in a process of accessing the first memory according to the first physical address, when it is second memory, a memory controller accesses the second memory according to a second physical address stored in the first small page, where the second physical address is a physical address of a second small page in the second memory, the second small page stores the data migrated from the first small page, the second memory includes a plurality of small pages, and a size of a small page in the second memory is less than a size of a large page in the first memory.

In a technical solution provided in this embodiment, to ensure a high hit ate in a TLB, a memory page in a page table of the computer system is still set to a large page. In addition, in the computer system provided in this embodiment of the present invention, a plurality of small pages are set in the large page. When some data in a large page needs to be migrated, data of a small page in a physical large page may be separately migrated. In an access process, when the memory controller accesses the nonvolatile memory according to the first physical address of the first large page, if determining that the data of the first small page in the first large page has been migrated to the second memory (namely, a volatile memory), the memory controller may access the migrated data according to the physical address of the second small page stored in the first small page. Therefore, according to the technical solution provided in this embodiment, even if a small page in a large page has been migrated, the memory can still be accessed based on the large page, thereby ensuring excellent address translation performance of the large page memory while meeting a requirement for hot data migration of the hybrid memory. Therefore, a memory hit rate can be ensured when some data in a large page is migrated.

In an implementation, the computer system monitors a quantity of times of accessing each small page of the physical large page, migrates data of any small page to a physical small page of a DRAM 52 when a quantity of times of accessing the small page exceeds a specified threshold, and adds an address of the physical small page of the DRAM 52 to the small page from which the data is migrated. Because the address of the physical small page in the second memory is added to the small page from which the data is migrated, the computer system may continue to locate the small page according to a mapping between the physical large page and a virtual page, and read from the small page the address of the physical small page in the second memory, so as to access the data migrated to the second memory.

In an optional implementation, a bitmap is maintained by the computer system. The bitmap stores information indicating whether each small page of the first memory is migrated. For each small page from which data is migrated, an identifier indicating that data in the small page has been migrated is set in the bitmap. A first identifier is set in the specified bitmap after the data of the first small page is migrated to the second small page, where the first identifier is used to indicate that the data in the first small page has been migrated.

In an implementation, the computer system further includes a second page table buffer. After the data in the first small page is migrated to the second small page, a mapping relationship between a second virtual address and the second physical address is further added to the second page table buffer. The second page table buffer is used to record a mapping relationship between a virtual address and a physical address of a small page in the second memory. Further, when accessing the migrated data, the MMU 20 may quickly determine, according to the mapping in the second page table buffer, that a memory physical address for storing the data is an address of a physical small page in the second memory, and access target data according to the address of the physical small page, thereby reducing time consumption of memory access and improving memory access efficiency.

In an optional implementation, a process in which the computer system accesses the data migrated to the second memory is as follows: The MMU 20 receives a second access request, where the second access request includes the second virtual address; the MMU 20 obtains, according to the second page table buffer, the second physical address that has the mapping relationship with the second virtual address; and the MMU 20 sends the second physical address to the memory controller, and the memory controller accesses the second memory according to the second physical address.

According to a second aspect, an embodiment of this application provides a computer system, including a processor, a memory management unit MMU, a memory controller, and a hybrid memory, where the hybrid memory includes a first memory and a second memory, the first memory is a nonvolatile memory, and the second memory is a volatile memory. The MMU is configured to: receive a first access request sent by the processor, where the access request comprises a first virtual address; and translate the first virtual address into a first physical address according to a first page table buffer, where the first physical address is a physical address of a first large page in the first memory, the first page table buffer is used to record a mapping relationship between a virtual address and a physical address of a large page in the first memory, and the large page of the first memory includes a plurality of small pages. The memory controller is configured to: access the first memory according to the first physical address, and in a process of accessing the first memory according to the first physical address, when it is determined that data of a first small page in the first large page is migrated to the second memory, access the second memory according to a second physical address stored in the first small page, where the second physical address is a physical address of a second small page in the second memory, the second small page stores the data migrated from the first small page, the second memory includes a plurality of small pages, and a size of a small page in the second memory is less than a size of a large page in the first memory.

In an implementation, the memory controller is further configured to:
migrate the data in the first small page to the second small page when a quantity of times of accessing the first small page exceeds a specified threshold, and store the second physical address of the second small page in the first small page.

In an optional implementation, the memory controller is further configured to: set a first identifier in a specified bitmap after migrating the data of the first small page to the second small page, where the first identifier is used to indicate that the data in the first small page has been migrated.

In an implementation, the computer system further includes a second page table buffer, where the second page table buffer is used to record a mapping relationship between a virtual address and a physical address of a small page in the second memory.

The processor is further configured to: add a mapping relationship between a second virtual address and the second physical address to the second page table buffer after the data in the first small page is migrated to the second small page.

In an optional implementation, the MMU is further configured to: receive a second access request sent by the processor, where the second access request includes the second virtual address; and obtain, according to the second page table buffer, the second physical address that has the mapping relationship with the second virtual address. The memory controller is further configured to access the second memory according to the second physical address.

According to a third aspect, an embodiment of this application provides a memory access apparatus, where the memory access apparatus is applied to a computer system for memory access. The computer system includes a hybrid memory, and the hybrid memory includes a first memory and a second memory. The first memory is a nonvolatile memory, and the second memory is a volatile memory. The memory access apparatus includes:
a receiving module, configured to receive a first access request, where the access request comprises a first virtual address;
a translation module, configured to translate the first virtual address into a first physical address according to a first page table buffer in the computer system, where the first physical address is a physical address of a first large page in the first memory, and the first large page includes a plurality of small pages; and
an access module, configured to: in a process of accessing the first memory according to the first physical address, when it is determined that data of a first small page in the first large page is migrated to the second memory, access the second memory according to a second physical address stored in the first small page, where the second physical address is a physical address of a second small page in the second memory, the second small page stores the data migrated from the first small page, the second memory includes a plurality of small pages, and a size of a small page in the second memory is less than a size of a large page in the first memory.

In an implementation, the memory access apparatus further includes: a migration module, configured to migrate the data in the first small page to the second small page when a quantity of times of accessing the first small page exceeds a specified threshold; and store the second physical address of the second small page in the first small page.

In an optional implementation, the memory access apparatus further includes:
an identification module, configured to set a first identifier in a specified bitmap after the data of the first small page is migrated to the second small page, where the first identifier is used to indicate that the data in the first small page has been migrated.

In an implementation, the computer system further includes a second page table buffer, and the memory access apparatus further includes:
a mapping module, configured to add a mapping relationship between a second virtual address and the second physical address to the second page table buffer after the data in the first small page is migrated to the second small page, where the second page table buffer is used to record a mapping relationship between a virtual address and a physical address of a small page in the second memory.

In an optional manner, the receiving module is further configured to: receive a second access request, where the second access request includes the second virtual address; and obtain, according to the second page table buffer, the second physical address that has the mapping relationship with the second virtual address; and
the access module is further configured to access the second memory according to the second physical address.

According to a fourth aspect, this application further provides a computer readable storage medium, where the computer readable storage medium is configured to store program code, where an instruction included in the program code is executed by a computer, to implement the method according to the first aspect or any one of the possible implementations of the first aspect.

### BRIEF DESCRIPTION OF DRAWINGS

FIG. 1 is a schematic structural diagram of a computer system according to an embodiment of this application;
FIG. 2 to FIG. 5A are schematic flowcharts of memory access methods according to embodiments of this application;
FIG. 5B is a schematic flowchart of memory access methods not according to the embodiments of this application; and
FIG. 6 is a schematic diagram of a memory access apparatus according to an embodiment of this application.

### DESCRIPTION OF EMBODIMENTS

To make the objectives, technical solutions, and advantages of this application clearer, the following further describes this application in detail with reference to the accompanying drawings.

This application provides a memory access method and a computer system, so as to resolve a technical problem that it is difficult to combine a hybrid memory with a physical large page technology for application. The memory access method and the computer system are based on a same inventive concept. Because the memory
access method and the computer system have similar principles for resolving problems, for implementations of the computer system and the method, reference may be made to each other, and repeated details are not described.

The "data" in the embodiments of this application is generalized data, which may be either instruction code of an application program or data used for running the application program. "A plurality of" mentioned in the embodiments of this application means two or more. In addition, it should be understood that in the description of this application, words such as "first" and "second" are merely used for distinction and description, and shall not be understood as an indication or implication of relative importance or an indication or implication of an order.

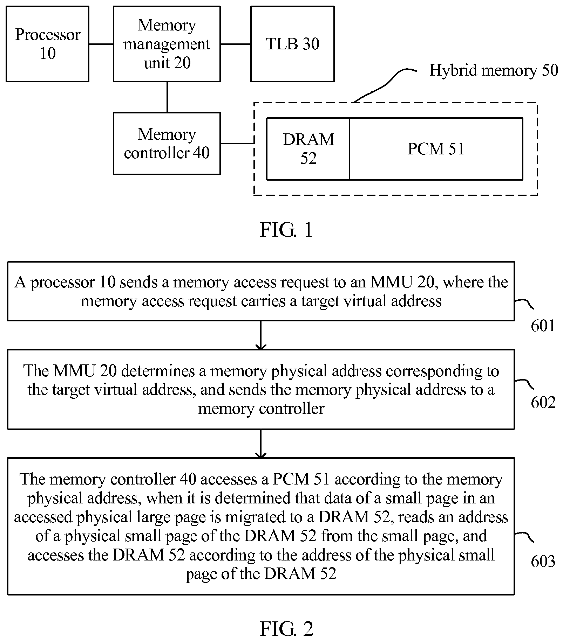

The computer system in the embodiments of this application may have a plurality of forms, such as a personal computer, a server, a tablet computer, and a smartphone. FIG. 1 is a possible architecture of a computer system according to an embodiment of this application. The computer system includes a processor 10, a memory management unit (memory management unit, MMU) 20, a TLB 30, a memory controller 40, and a hybrid memory 50. Optionally, the computer system further includes a secondary memory, configured to expand a data storage capacity of the computer system.

The processor 10 is an operation center and a control center of the computer system. The MMU 20 is configured to implement translation between a memory virtual address and a memory physical address, so that the processor 10 can access the hybrid memory 50 according to the memory virtual address. The TLB 30 is configured to store a mapping between a virtual address and a memory physical address. Specifically, the mapping may be a mapping between a physical page number and a virtual page number of the memory, so as to improve efficiency of address translation performed by the MMU. The memory controller 40 is configured to receive a memory physical address from the MMU 20, and access the hybrid memory 50 according to the memory physical address. The hybrid memory 50 includes a first memory and a second memory. The first memory is a nonvolatile memory NVM, such as a phase change memory (Phase Change Memory, PCM), a ferroelectric random access memory (Ferroelectric RAM, FeRAM), and a magnetic random access memory (Magnetic Random Access Memory, MRAM). The second memory is a volatile memory, such as a DRAM.

A technical solution in this embodiment of this application is described in the following content by using an example in which the first memory is a PCM 51, and the second memory is a DRAM 52.

In a paging memory management mechanism, virtual address space of an application program is divided into a plurality of virtual pages (page) of a fixed size, and a physical memory is divided into physical pages of a same size. When an application program is loaded, data of any page may be placed in any physical pages, and these physical pages may further be inconsecutive. A mapping between a physical page number and a virtual page number is recorded in a page table, and the page table is recorded in a memory. When an application program reads and writes a memory physical address corresponding to a virtual address, the application program first determines a page number of a virtual page in which the virtual address is located and an offset in the virtual page, and searches the page table to determine a physical page corresponding to the virtual page, so as to access a location of the offset in the physical page, namely, the memory physical address to be accessed by the application program. If each time of conversion from a virtual page to a physical page requires access to the page table in the memory, it consumes a lot of time. Therefore, the TLB is disposed in the computer system as an advanced cache for performing address translation, and some commonly used page table entries are stored in the TLB and are a subset of the page table. In this way, when performing memory addressing, the computer system may first search the TLB for a matched TLB page table entry for address translation, and if a page table entry of a target virtual address is not found in the TLB, namely, a TLB miss (miss), the computer system searches the page table in the memory for a corresponding table entry. To reduce a probability of a TLB miss and improve address translation efficiency, a physical page is usually set to a large page, for example, a size of the physical page is set to 2 M.

In this embodiment of this application, the page table may be stored in the PCM 51, or may be stored in the DRAM 52, or a part of the page table is stored in the PCM 51, and the other part of the page table is stored in the DRAM 52. Because costs of unit storage space of the PCM 51 are relatively low, storage space of the PCM 51 is usually greater than storage space of the DRAM 52, and large storage space enables the PCM 51 to adapt to a large-page memory technology. That is, a physical page of the PCM may be set to be relatively large, for example, 2 megabytes (Mbyte, MB). For ease of differentiation, in this embodiment of this application, a physical page of the PCM 51 is referred to as a physical large page, a physical page of the DRAM 52 is referred to as a physical small page, and the physical large page of the PCM 51 is greater than the physical small page of the DRAM.

In this embodiment of this application, a page table that stores a mapping between a physical large page of the PCM 51 and a virtual page in virtual address space is referred to as a first page table. A first page table buffer may be stored in the TLB 30. The first page table buffer includes some page table entries of the first page table. The MMU 20 may quickly translate a physical address in a memory access request into a memory physical address of the PCM 51 according to the first page table buffer. The memory controller 40 further accesses the PCM 51 according to the memory physical address.

With reference to FIG. 2, the following describes a memory access method according to an embodiment of this application. The method includes the following steps.

Step 601: A processor 10 sends a memory access request to an MMU 20, where the memory access request comprises a target virtual address.

Step 602: The MMU 20 determines a memory physical address corresponding to the target virtual address, and sends the memory physical address to a memory controller.

A process of determining the memory physical address corresponding to the target virtual address by the MMU 20 is as follows: First, the MMU 20 calculates a virtual page number based on the target virtual address, for example, based on a 32-bit virtual address VA: 0100 1001 0110 1010 0011 1111 0001 1011. When a physical page of a PCM 51 is 2 MB, a size of a virtual page is also 2 MB. The VA is shifted rightward (page_shift) by 21 bits, and a virtual page number is obtained, namely, vpn = VA >> 21. An offset of the target virtual address in the virtual page is offset = VA & (1 << 21 - 1), and therefore the last 21 bits of the virtual address are obtained. Then, the MMU 20 queries a page table buffer in a TLB 30 according to the virtual page number to determine a physical large page corresponding to the virtual page. The memory physical address corresponding to the target virtual address is an address of a location of the offset in the physical large page.

Step 603: The memory controller 40 accesses the PCM 51 according to the memory physical address, and when it is determined that data of a small page in an accessed physical large page is migrated to a DRAM 52, reads an address of a physical small page of the DRAM 52 from the small page, and accesses the DRAM 52 according to the address of the physical small page of the DRAM 52.

In this embodiment of this application, a physical large page of the PCM 51 includes a plurality of small pages, and data of any small page of the physical large page may be separately migrated to the DRAM 52, and there is no need to migrate data of the entire physical large page to the DRAM 52. After data of any small page of the physical large page of the PCM 51 is migrated to a physical small page of the DRAM 52, an address of the physical small page, in which the migrated data is stored, of the DRAM 52 is added to the small page, from which the data is migrated, of the PCM 51. In this way, the MMU 20 may still access data in the PCM 51 according to a physical large page number of the PCM 51. When accessing the small page in which the data is migrated, the MMU 20 may read the address, of the physical small page of the DRAM 52, stored in the small page and skip to access the DRAM 52.

Therefore, in the technical solution provided in this embodiment of this application, a memory page in a page table of a computer system is still set in a form of a large page, thereby ensuring a high hit rate in the TLB. In addition, in the computer system provided in this embodiment of the present invention, a plurality of small pages are set in the large page. When some data in a large page needs to be migrated, data of a small page in a physical large page may be separately migrated. In an access process, when the memory controller accesses a nonvolatile memory according to a first physical address of a first large page, if determining that data of a first small page in the first large page has been migrated to a second memory (namely, a volatile memory), the memory controller may access the migrated data according to a physical address, of a second small page, stored in the first small page. Therefore, according to the technical solution provided in this embodiment, even if a small page in a large page has been migrated, the memory can still be accessed based on the large page, thereby ensuring excellent address translation performance of a large page memory while meeting a requirement for hot data migration of a hybrid memory. Therefore, a memory hit rate can be ensured when some data in a large page is migrated.

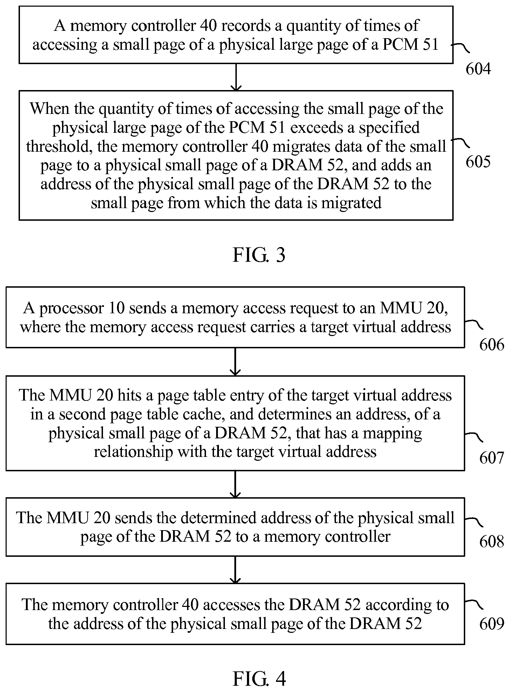

Optionally, referring to FIG. 3, the memory access method provided in this embodiment of the present invention further includes the following steps:
Step 604: The memory controller 40 records a quantity of times of accessing the small page of the physical large page of the PCM 51.

In some embodiments, step 601 may alternatively be implemented by the processor 10 by running an operating system.

Step 605: When the quantity of times of accessing the small page of the physical large page of the PCM 51 exceeds a specified threshold, the memory controller 40 migrates data of the small page to a physical small page of the DRAM 52, and adds an address of the physical small page of the DRAM 52 to the small page from which the data is migrated.

The quantity of access times in "the quantity of times of accessing the small page exceeds the specified threshold" may be a total quantity of times of accessing the small page in history, or may be a quantity of times of accessing the small page in a latest preset period of time. When a quantity of times of accessing a small page exceeds the specified threshold, it indicates that the small page is a hot data block, data of the small page may be migrated to a physical small page of the DRAM 52, and an address of the physical small page of the DRAM 52 is added to the small page from which the data is migrated, so that the computer system can access, according to a procedure of step 601 to step 603, the data migrated to the DRAM 52.

In this embodiment of this application, a size of each small page of the physical large page of the PCM 51 may be equal to a size of a physical small page of the DRAM 52. In this case, one physical small page stores data migrated from one small page of the physical large page. In some embodiments, the size of each small page of the physical large page of the PCM 51 may alternatively be greater than the size of the physical small page of the DRAM 52. In this case, a plurality of physical small pages store data migrated from a small page of the physical large page, and an address of the first physical small page of the plurality of physical small pages may be added to the small page from which the data is migrated.

In the foregoing technical solution, instead of the entire physical large page, a small page in the physical large page is migrated separately, thereby reducing time consumption of data migration and consumption of an input/output (input/output,I/O) resource.

Optionally, in this embodiment of this application, in step 603, that the memory controller 40 determines that the data of the small page in the accessed physical large page is migrated to the DRAM 52 includes a plurality of implementations:

First, when accessing the small page, the memory controller determines that content stored in the small page is not data, but a memory physical address.

Second, a bitmap is maintained by the computer system. The bitmap stores information indicating whether data of each small page of the PCM 51 is migrated. For each small page from which data is migrated, an identifier indicating that data in the small page has been migrated is set in the bitmap. Table 1 is a possible implementation of the bitmap. A migration identifier 0 indicates that no data is migrated, and a migration identifier 1 indicates that data is migrated. As shown in Table 1, it indicates that data of the first small page, data of the second small page, and data of the fourth small page of a physical large page B are not migrated, while data of the third small page is migrated. The memory controller may determine, by querying the bitmap, whether any small page of the PCM 51 is migrated.

**Table 1**

| Physical large page number | Migration identifier sequence |
|---|---|
| B | 0010... |
| ... | ... |

In this embodiment of this application, the bitmap may be stored in storage space inside the memory controller 40, or may be stored in a storage device outside the memory controller 40, such as various cache devices.

In the foregoing technical solution, an identifier is set in the bitmap to indicate that data of a small page is migrated, so that the memory controller 40 quickly reads an address from the small page and then accesses the DRAM 52, thereby improving memory access efficiency.

Optionally, in this embodiment of this application, in addition to the first page table buffer, the TLB 30 further stores a second page table buffer. A page table entry in the second page table buffer includes a mapping between a virtual small page number in virtual address space and a physical small page of the DRAM 52. The virtual small page refers to a virtual page formed by dividing the virtual address space according to a size of the physical small page of the DRAM 52. For differentiation between the virtual small page and the virtual page in the first page table buffer, in this embodiment of this application, a virtual page formed by dividing the virtual address space according to the physical large page of the PCM 51 is referred to as a virtual large page, and a virtual page formed by dividing the virtual address space according to the physical small page of the DRAM 52 is referred to as a virtual small page.

In this embodiment of this application, after data of a small page of the physical large page is migrated to a physical small page, the computer system adds a mapping between the physical small page and the virtual small page to the second page table buffer in the TLB 30. In this way, when the processor 10 accesses the migrated data, the MMU 20 may quickly determine, according to the mapping in the second page table buffer, that a memory physical address for storing the data is an address of a physical small page in the DRAM 52, and accesses target data according to an address of the physical small page, instead of skipping to access the target data according to the method described in steps 602 and 603, thereby further shortening time consumption of memory access and improving memory access efficiency.

The first page table buffer and the second page table buffer may be stored in a same TLB physical entity (not forming part of the claimed invention), or the computer system includes two TLBs that are separately configured to store the first page table buffer and the second page table buffer. The mapping between the physical small page and the virtual small page may be added to the second page table buffer before or after the migrated data is accessed for the first time. In addition, the mapping between the physical small page and the virtual small page may be added to the second page table buffer by the processor by running an operating system instruction.

Referring to FIG. 4, with reference to the optional implementation in which the TLB 30 stores the second page table buffer, the memory access method further includes the following steps:
Step 606: The processor 10 sends a memory access request to the MMU 20, where the memory access request comprises a target virtual address.

Step 607: The MMU 20 hits a page table entry of the target virtual address in the second page table buffer and determines an address, of a physical small page of the DRAM 52, that has a mapping relationship with the target virtual address.

Step 608: The MMU 20 sends the determined address of the physical small page of the DRAM 52 to the memory controller.

Step 609: The memory controller 40 accesses the DRAM 52 according to the address of the physical small page of the DRAM 52.

In the foregoing technical solution, when a small page of the PCM 51 is migrated to a physical small page of the DRAM 52, the computer system may quickly determine, according to the second page table buffer, that a memory physical address for storing the data is an address of a physical small page of the DRAM 52, and access the target data according to an address of the physical small page, thereby improving memory access efficiency.

Optionally, in this embodiment of this application, the PCM 51 and the DRAM 52 are addressed by using unified address space. For example, the DRAM 52 has a low address, and the PCM 51 has a high address, which is managed uniformly by an operating system. The hybrid memory including the PCM 51 and the DRAM 52 is connected to the processor 10 by using a system bus, and data read/write access is performed by using the memory controller 40. The hybrid memory and a secondary memory are connected through an input/output (input/output, I/O) interface for data exchange. When a process requests the operating system to allocate a memory, only the PCM51 memory is allocated. The DRAM 52 is configured to store data of a write hot storage block migrated from the PCM 51, and is not directly allocated to the process.

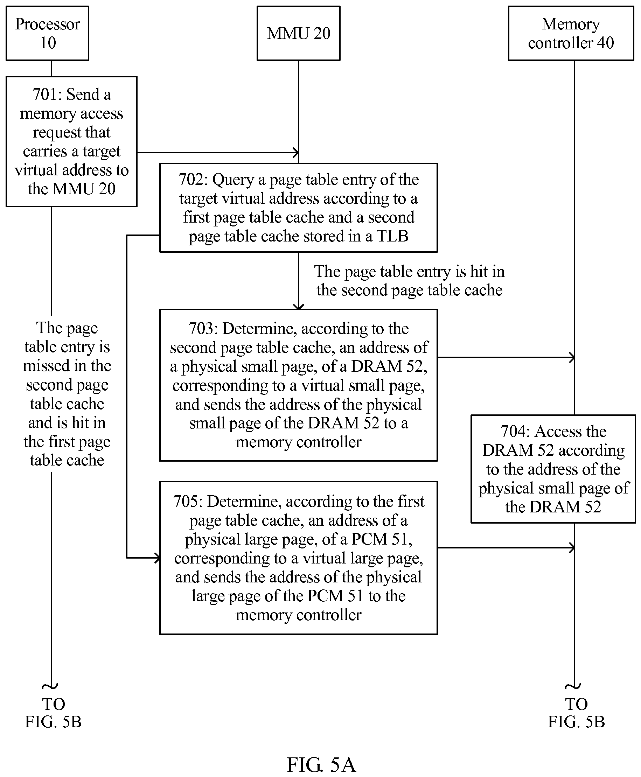

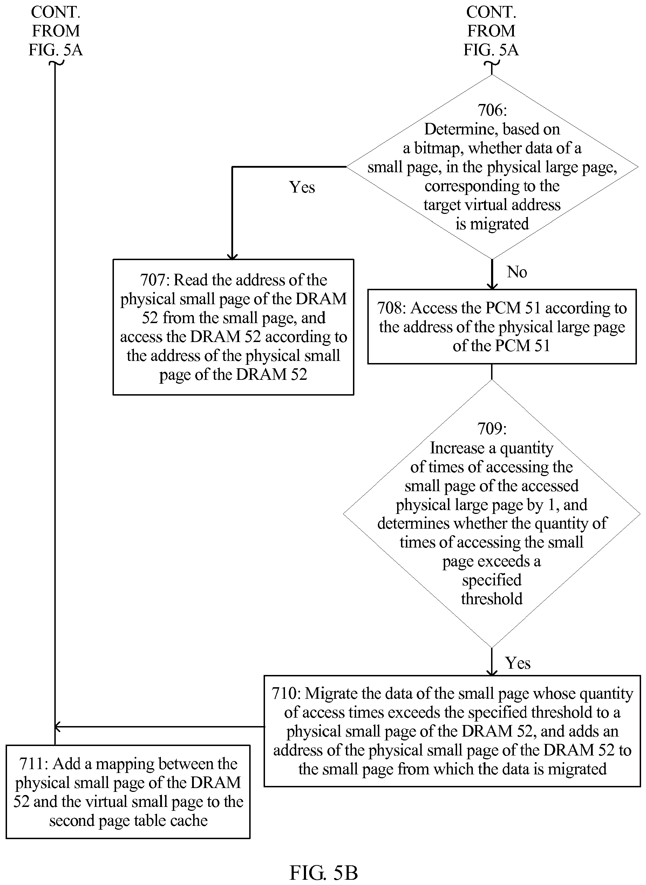

Referring to FIG. 5A and FIG. 5B, the following describes a process of a memory access method according to an embodiment of this application, including the following steps.

Step 701: A processor 10 sends a memory access request to an MMU 20, where the memory access request comprises a target virtual address. Go to step 702.

Step 702: The MMU 20 queries a page table entry of the target virtual address according to a first page table buffer and a second page table buffer stored in a TLB. If the page table entry is hit in the second page table buffer, go to step 703. If the page table entry is missed in the second page table buffer and is hit in the first page table buffer, perform step 705. If the page table entry is missed in the first page table buffer and the second page table buffer, perform TLB miss processing.

After receiving the memory access request, the MMU 20 first calculates a virtual large page number and a virtual small page number separately based on the target virtual address. For explanation of the two concepts, refer to the foregoing description. For example, it is assumed that a size of a physical large page of a PCM 51 is 2 MB, a size of a physical small page of a DRAM 52 is 4 KB, and a virtual address VA is 0100 1001 0110 1010 0011 1111 0001 1011. Then, the virtual large page number big_vpn = VA > > 21, that is, the virtual address is shifted rightward by 21 bits; and the virtual small page number small_vpn = VA > > 12, that is, the virtual address is shifted rightward by 12 bits.

Then, the MMU 20 queries a mapping of the virtual large page number in the first page table buffer, and queries a mapping of the virtual small page number in the second page table buffer. One query sequence is as follows: The MMU 20 first searches the second page table buffer for the virtual small page number, and only after the virtual small page number is missed (miss) in the second page table buffer, the MMU 20 searches the first page table buffer for the virtual large page number. Another query sequence is as follows: The MMU 20 queries at the same time the mapping of the virtual large page number in the first page table buffer and the mapping of the virtual small page number in the second page table buffer. If the mapping is hit in the second page table buffer, the MMU 20 stops searching in the first page table buffer; or if the mapping is hit in the first page table buffer, the MMU 20 still needs to further search in the second page table buffer.

Step 703: The MMU 20 determines, according to the second page table buffer, an address of a physical small page, of the DRAM 52, corresponding to a virtual small page, and sends the address of the physical small page of the DRAM 52 to the memory controller. Go to step 704.

Step 704: The memory controller 40 accesses the DRAM 52 according to the address of the physical small page of the DRAM 52.

Step 705: The MMU 20 determines, according to the first page table buffer, an address of the physical large page, of the PCM 51, corresponding to a virtual large page, and sends the address of the physical large page of the PCM 51 to the memory controller. Go to step 706.

Step 706: The memory controller 40 determines, based on a bitmap, whether data of a small page, in the physical large page, corresponding to the target virtual address is migrated. If the data is migrated, the memory controller 40 performs step 707; otherwise, the memory controller 40 performs step 708.

A manner of determining the small page, in the physical large page, corresponding to the target virtual address is as follows: According to the page number of the physical large page determined in step 705, a physical address, of the PCM 51, corresponding to the target virtual address is at a location of a large page offset in the physical large page. According to the example in step 702 in which the physical large page is 2 MB, the large page offset big_offset = VA & (1 << 21-1), namely, the last 21 bits of the virtual address. According to the physical large page number and the large page offset, the small page, in the physical large page, corresponding to the target virtual address may be located.

Step 707: The memory controller reads the address of the physical small page of the DRAM 52 from the small page, and accesses the DRAM 52 according to the address of the physical small page of the DRAM 52.

Step 708: The memory controller accesses the PCM 51 according to the address of the physical large page of the PCM 51. Go to step 709.

Step 709: The memory controller increases a quantity of times of accessing the small page of the accessed physical large page by 1, and determines whether the quantity of times of accessing the small page exceeds a specified threshold. If the quantity of times of accessing the small page exceeds the specified threshold, the memory controller performs step 710.

Step 710: The memory controller migrates data of the small page whose quantity of access times exceeds the specified threshold to a physical small page of the DRAM 52, and adds an address of the physical small page of the DRAM 52 to the small page from which the data is migrated. Go to step 711.

Step 711: The processor 10 adds a mapping between the physical small page of the DRAM 52 and the virtual small page to the second page table buffer.

The TLB miss is processed as follows: The MMU 20 queries a first page table in the memory, finds a mapping of the virtual large page, and adds the mapping to the first page table buffer. After processing the TLB miss, the MMU 20 continues to perform step 705.

In the foregoing procedure, when a large page memory of the PCM 51 is reserved to ensure a high hit rate in the TLB, the MMU 20 may quickly search the first page table buffer and the second page table buffer stored in the TLB 30 for a page table entry corresponding to the target virtual address, so as to quickly determine the target physical address, thereby improving memory access efficiency.

In an embodiment of this application, the bitmap used to represent whether data of a small page of the physical large page is migrated is stored in the first page table buffer. In step 702, if the page table entry is missed in the second page table buffer and is hit in the first page table buffer, the MMU 20 queries the bitmap to further determine whether the data of the small page, in the physical large page, corresponding to the target virtual address is migrated. If the data is migrated, the MMU 20 instructs the memory controller 40 to perform step 707; otherwise, the MMU 20 instructs the memory controller 40 to perform step 708. Table 2 is a schematic diagram of the first page table buffer including the bitmap. According to Table 2, it may be determined that a virtual large page b is corresponding to a physical large page B, the first small page, the second small page, and the fourth small page of the physical large page B are not migrated, and the third small page is migrated.

**Table 2**

| Virtual large page number | Physical large page number | Migration identifier sequence |
|---|---|---|
| b | B | 0010.... |
| ... | ... | |

In addition, the technical solution provided in this embodiment of the present invention may be combined with a cache (cache) technology. After the MMU 20 determines the physical large page address or the physical small page address corresponding to the target virtual address, the computer system may first search the cache for data corresponding to the physical large page address or the physical small page address. Only after the data is missed in the cache, the memory controller accesses the memory according to the physical large page address or the physical small page address.

Optionally, in this embodiment of this application, when data of a small page of the physical large page of the PCM 51 needs to be migrated to the DRAM 52, if there is no free storage space in the DRAM 52, the memory controller 40 migrates one or more physical small pages in the DRAM 52 back to the PCM 51 according to a preset page replacement algorithm. The preset page replacement algorithm may be implemented in a plurality of manners, including but not limited to the following algorithms:
(1) First-in-first-out algorithm, that is, data migrated earliest to the DRAM 52 is migrated back to the PCM 51;
(2) Not recently used (not recently used, NRU) algorithm, that is, data that has not been accessed for the longest time in the DRAM 52 is migrated back to the PCM 51;
(3) Least recently used (least recently used, LRU) algorithm, that is, data that is accessed least recently in the DRAM 52 is migrated back to the PCM 51;
(4) Optimal replacement algorithm, that is, data that is no longer accessed in the DRAM 52 is migrated back to the PCM 51, or data that will not be accessed for the longest time in the DRAM 52 is migrated back to the PCM 51.

The preset page replacement algorithm may further include a clock algorithm, a second chance algorithm, and the like. Refer to the prior art, and details are not described in this embodiment of this application.

In the foregoing technical solution, when the DRAM 52 does not have free space for storing data migrated from the PCM 51, data stored in the DRAM 52 may be migrated back to the PCM 51 according to various preset page replacement algorithms, so that the DRAM 52 can always accommodate data of a recently frequently written small page, thereby improving storage space utilization of the DRAM 52.

Optionally, in this embodiment of this application, if the bitmap used to represent whether data of a small page of the physical large page of the PCM 51 is migrated is set in the computer system, after data migrated from a small page of the PCM 51 is migrated back to the small page from the DRAM 52, an identifier that represents that the data of the small page is migrated is deleted from the bitmap.

Still referring to FIG. 1, an embodiment of this application provides a computer system, including a processor 10, an MMU 20, a memory controller 40, and a hybrid memory 50. The processor 10 may communicate with the MMU 20, the memory controller 40, and the hybrid memory 50 by using a bus. The hybrid memory 50 includes a first memory and a second memory, where the first memory is a nonvolatile memory such as the PCM 51 in FIG. 1, and the second memory is a volatile memory such as the DRAM 52 in FIG. 1.

The MMU 20 is configured to:
receive a first access request sent by the processor 10, where the access request comprises a first virtual address; and
translate the first virtual address into a first physical address according to a first page table buffer, where the first physical address is a physical address of a first large page in the first memory, the first page table buffer is used to record a mapping relationship between a virtual address and a physical address of a large page in the first memory, and the large page of the first memory includes a plurality of small pages.

The memory controller 40 is configured to access the first memory according to the first physical address, and in a process of accessing the first memory according to the first physical address, when it is determined that data of a first small page in the first large page is migrated to the second memory, access the second memory according to a second physical address stored in the first small page, where the second physical address is a physical address of a second small page in the second memory, the second small page stores the data migrated from the first small page, the second memory includes a plurality of small pages, and a size of a small page in the second memory is less than a size of a large page in the first memory.

In an optional manner, the memory controller 40 is further configured to:
migrate the data in the first small page to the second small page when a quantity of times of accessing the first small page exceeds a specified threshold; and
store the second physical address of the second small page in the first small page.

In an optional manner, the memory controller 40 is further configured to:
set a first identifier in a specified bitmap after migrating the data of the first small page to the second small page, where the first identifier is used to indicate that the data in the first small page has been migrated.

In an optional manner, the computer system further includes a second page table buffer, where the second page table buffer is used to record a mapping relationship between a virtual address and a physical address of a small page in the second memory.

The processor 10 is further configured to:
add a mapping relationship between a second virtual address and the second physical address to the second page table buffer after the data in the first small page is migrated to the second small page.

In an optional manner, the MMU 20 is further configured to:
receive a second access request sent by the processor, where the second access request includes the second virtual address; and
obtain, according to the second page table buffer, the second physical address that has the mapping relationship with the second virtual address.

The memory controller 40 is further configured to access the second memory according to the second physical address.

In an optional implementation, the computer system further includes a TLB 30, configured to store the first page table buffer. In some embodiments, the TLB 30 is further configured to store the second page table buffer.

The processor 10 may be a processor element, or may be a general term of a plurality of processor elements. For example, the processor may be a central processing unit (Central Processing Unit, CPU), or may be an application-specific integrated circuit (Application-Specific Integrated Circuit, ASIC), or one or more integrated circuits configured to implement this embodiment of the present invention, for example, one or more microprocessors (e.g. Digital Signal Processor, DSP) or one or more field programmable gate arrays (Field Programmable Gate Array, FPGA).

The MMU 20, the TLB 30, and the memory controller 40 may be integrated with the processor 10, or may be independent of the processor 10. The MMU 20 and the TLB 30 may be integrated together, or may be two independent components. In an embodiment in which the TLB 30 stores both the first page table buffer and the second page table buffer, the TLB 30 may be one TLB component (not forming part of the claimed invention), or may be two TLB components. In the latter case, the two TLB components are separately configured to store the first page table buffer and the second page table buffer. An implementation of the hybrid memory 50 is described in the foregoing description of FIG. 1, and is not repeated herein.

Actions performed and functions brought by the computer system in a memory access process are described in detail in the memory access methods in FIG. 2 to FIG. 5B, and are not repeated herein.

An embodiment of this application further provides a computer readable storage medium, configured to store a computer software instruction that needs to be executed by the processor 10. The computer readable storage medium includes a program that needs to be executed by the processor 10.

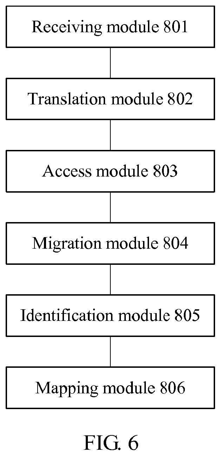

FIG. 6 is a schematic diagram of a memory access apparatus according to an embodiment of this application. The memory access apparatus is applied to a computer system for memory access. The computer system includes a hybrid memory, and the hybrid memory includes a first memory and a second memory. The first memory is a nonvolatile memory, and the second memory is a volatile memory. The memory access apparatus includes:
a receiving module 801, configured to receive a first access request, where the access request comprises a first virtual address;
a translation module 802, configured to translate the first virtual address into a first physical address according to a first page table buffer in the computer system, where the first physical address is a physical address of a first large page in the first memory, and the first large page includes a plurality of small pages; and
an access module 803, configured to: in a process of accessing the first memory according to the first physical address, when it is determined that data of a first small page in the first large page is migrated to the second memory, access the second memory according to a second physical address stored in the first small page, where the second physical address is a physical address of a second small page in the second memory, the second small page stores the data migrated from the first small page, the second memory includes a plurality of small pages, and a size of a small page in the second memory is less than a size of a large page in the first memory.

In an optional manner, the memory access apparatus further includes:
a migration module 804, configured to migrate the data in the first small page to the second small page when a quantity of times of accessing the first small page exceeds a specified threshold, and store the second physical address of the second small page in the first small page.

In an optional manner, the memory access apparatus further includes:
an identification module 805, configured to set a first identifier in a specified bitmap after the data of the first small page is migrated to the second small page, where the first identifier is used to indicate that the data in the first small page has been migrated.

In an optional manner, the computer system further includes a second page table buffer, and the memory access apparatus further includes:
a mapping module 806, configured to add a mapping relationship between a second virtual address and the second physical address to the second page table buffer after the data in the first small page is migrated to the second small page, where the second page table buffer is used to record a mapping relationship between a virtual address and a physical address of a small page in the second memory.

In an optional manner, the receiving module 801 is further configured to: receive a second access request, where the second access request includes the second virtual address; and obtain, according to the second page table buffer, the second physical address that has the mapping relationship with the second virtual address; and
the access module 803 is further configured to access the second memory according to the second physical address.

For an implementation of each module of the memory access apparatus, refer to the implementation of each step in the memory access methods described in FIG. 2 to FIG. 5B.

An embodiment of the present invention further provides a computer program product for data processing, including a computer readable storage medium that stores program code, where an instruction included in the program code is used to execute the method process described in any one of the foregoing method embodiments. An ordinary person skilled in the art may understand that the foregoing storage medium includes any non-transitory (non-transitory) machine-readable medium capable of storing program code, such as a USB flash drive, a removable hard disk, a magnetic disk, an optical disc, a random access memory (Random-Access Memory, RAM), a solid state disk (Solid State Disk, SSD), or a nonvolatile memory (non-volatile memory).

This application is described with reference to the flowcharts and/or the block diagrams of the method, the device (system), and the computer program product according to this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

## Claims

1. A memory access method, wherein the method is applied to a computer system comprising a hybrid memory (50), the hybrid memory (50) comprises a first memory (51) and a second memory (52), the first memory (51) is a nonvolatile memory, the second memory (52) is a volatile memory, and the method comprises:
receiving a first access request, wherein the access request comprises a first virtual address;
translating the first virtual address into a first physical address according to a first page table buffer stored in a first translation lookaside buffer, TLB, of the computer system, wherein the first physical address is a physical address of a first large page in the first memory (51), and the first large page comprises a plurality of small pages; and
in a process of accessing the first memory (51) according to the first physical address, when it is determined that data of a first small page in the first large page is migrated to the second memory (52), accessing the second memory (52) according to a second physical address stored in the first small page, wherein the second physical address is a physical address of a second small page in the second memory (52), the second small page stores the data migrated from the first small page, the second memory (52) comprises a plurality of small pages, and a size of a small page in the second memory (52) is less than a size of a large page in the first memory (51);
wherein migrating the data in the first small page to the second small page occurs when a quantity of times of accessing the first small page exceeds a specified threshold; and
wherein the second physical address of the second small page is stored in the first small page; and
wherein the computer system further comprises a second page table buffer, and after the migrating the data in the first small page to the second small page, the method further comprises:
adding a mapping relationship between a second virtual address and the second physical address to a second page table buffer stored in a second TLB of the computer system, wherein the second page table buffer is used to record a mapping relationship between a virtual address and a physical address of a small page in the second memory (52).

2. The memory access method according to claim 1, wherein after the data of the first small page is migrated to the second small page, setting a first identifier in a specified bitmap, wherein the first identifier is used to indicate that the data in the first small page has been migrated.

3. The memory access method according to claim 1, wherein the method further comprises:
receiving a second access request, wherein the second access request comprises the second virtual address;
obtaining, according to the second page table buffer, the second physical address that has the mapping relationship with the second virtual address; and
accessing the second memory (52) according to the second physical address.

4. A computer system, comprising a processor (10), a memory management unit (20), MMU, a memory controller (40), and a hybrid memory (50), wherein the hybrid memory (50) comprises a first memory (51) and a second memory (52), the first memory (51) is a nonvolatile memory, and the second memory (52) is a volatile memory;
the MMU (20) is configured to:
receive a first access request sent by the processor (10), wherein the access request comprises a first virtual address; and
translate the first virtual address into a first physical address according to a first page table buffer, wherein the first physical address is a physical address of a first large page in the first memory (51), the first page table buffer is stored in a first translation lookaside buffer, TLB, that is used to record a mapping relationship between a virtual address and a physical address of a large page in the first memory (51), and the large page of the first memory (51) comprises a plurality of small pages; and
the memory controller (40) is configured to: access the first memory (51) according to the first physical address, and in a process of accessing the first memory (51) according to the first physical address, when it is determined that data of a first small page in the first large page is migrated to the second memory (52), access the second memory (52) according to a second physical address stored in the first small page, wherein the second physical address is a physical address of a second small page in the second memory (52), the second small page stores the data migrated from the first small page, the second memory (52) comprises a plurality of small pages, and a size of a small page in the second memory (52) is less than a size of a large page in the first memory (51);
wherein the memory controller (40) is further configured to:
migrate the data in the first small page to the second small page when a quantity of times of accessing the first small page exceeds a specified threshold; and
store the second physical address of the second small page in the first small page;
wherein the computer system further comprises a second page table buffer stored in a second TLB, and the second page table buffer is used to record a mapping relationship between a virtual address and a physical address of a small page in the second memory (52); and
the processor (10) is further configured to:
add a mapping relationship between a second virtual address and the second physical address to the second page table buffer after the data in the first small page is migrated to the second small page.

5. The computer system according to claim 4, wherein the memory controller (40) is further configured to:
set a first identifier in a specified bitmap after the data of the first small page is migrated to the second small page, wherein the first identifier is used to indicate that the data in the first small page has been migrated.

6. The computer system according to claim 4, wherein
the MMU (20) is further configured to:
receive a second access request sent by the processor (10), wherein the second access request comprises the second virtual address; and
obtain, according to the second page table buffer, the second physical address that has the mapping relationship with the second virtual address; and
the memory controller (40) is further configured to access the second memory (52) according to the second physical address.

7. A computer readable storage medium, comprising one or more computer executable instructions, wherein when the one or more computer executable instructions are executed by a computer, the computer performs the method according to any one of claims 1-3.

## Patentansprüche

1. Speicherzugriffsverfahren, wobei das Verfahren auf ein Computersystem angewendet wird, umfassend einen Hybridspeicher (50), wobei der Hybridspeicher (50) einen ersten Speicher (51) und einen zweiten Speicher (52) umfasst, wobei der erste Speicher (51) ein nichtflüchtiger Speicher ist, der zweite Speicher (52) ein flüchtiger Speicher ist, und das Verfahren umfasst:
Empfangen einer ersten Zugriffsanforderung, wobei die Zugriffsanforderung eine erste virtuelle Adresse umfasst;
Übersetzen der ersten virtuellen Adresse in eine erste physische Adresse gemäß einem ersten Seitentabellenpuffer, der in einem ersten Übersetzungspuffer (translation lookaside buffer - TLB) des Computersystems gespeichert ist, wobei die erste physische Adresse eine physische Adresse einer ersten großen Seite in dem ersten Speicher ist (51), und die erste große Seite eine Vielzahl von kleinen Seiten umfasst; und
in einem Zugriffsvorgang auf den ersten Speicher (51) gemäß der ersten physischen Adresse, wenn bestimmt wird, dass Daten einer ersten kleinen Seite auf der ersten großen Seite zu dem zweiten Speicher (52) migriert werden, Zugreifen auf den zweiten Speicher (52) gemäß einer zweiten physischen Adresse, die auf der ersten kleinen Seite gespeichert ist, wobei die zweite physische Adresse eine physische Adresse einer zweiten kleinen Seite in dem zweiten Speicher (52) ist, die zweite kleine Seite die Daten speichert, die von der ersten kleinen Seite migriert werden, der zweite Speicher (52) eine Vielzahl von kleinen Seiten umfasst, und eine Größe einer kleinen Seite in dem zweiten Speicher (52) kleiner als eine Größe einer großen Seite in dem ersten Speicher (51) ist;
wobei das Migrieren der Daten auf der ersten kleinen Seite zu der zweiten kleinen Seite erfolgt, wenn eine Menge von Zugriffen auf die erste kleine Seite einen spezifizierten Schwellenwert überschreitet; und
wobei die zweite physische Adresse der zweiten kleinen Seite auf der ersten kleinen Seite gespeichert ist; und
wobei das Computersystem ferner einen zweiten Seitentabellenpuffer umfasst, und nach dem Migrieren der Daten auf der ersten kleinen Seite zu der zweiten kleinen Seite, das Verfahren ferner umfasst:
Hinzufügen einer Zuordnungsbeziehung zwischen einer zweiten virtuellen Adresse und der zweiten physischen Adresse zu einem zweiten Seitentabellenpuffer, der in einem zweiten TLB des Computersystems gespeichert ist, wobei der zweite Seitentabellenpuffer verwendet wird, um eine Zuordnungsbeziehung zwischen einer virtuellen Adresse und einer physischen Adresse einer kleinen Seite in dem zweiten Speicher (52) aufzuzeichnen.

2. Speicherzugriffsverfahren nach Anspruch 1, wobei, nachdem die Daten der ersten kleinen Seite zu der zweiten kleinen Seite migriert werden, Einstellen eines ersten Bezeichners in einer spezifizierten Bitmap, wobei der erste Bezeichner verwendet wird, um anzuzeigen, dass die Daten auf der ersten kleinen Seite migriert wurden.

3. Verfahren nach Anspruch 1, wobei das Verfahren ferner umfasst:
Empfangen einer zweiten Zugriffsanforderung, wobei die zweite Zugriffsanforderung die zweite virtuelle Adresse umfasst;
Erhalten, gemäß dem zweiten Seitentabellenpuffer, der zweiten physischen Adresse, die die Zuordnungsbeziehung mit der zweiten virtuellen Adresse aufweist; und
Zugreifen auf den zweiten Speicher (52) gemäß der zweiten physischen Adresse.

4. Computersystem, umfassend einen Prozessor (10), eine Speicherverwaltungseinheit (20) (memory management unit - MMU), eine Speichersteuerung (40) und einen Hybridspeicher (50), wobei der Hybridspeicher (50) einen ersten Speicher (51) und einen zweiten Speicher (52) umfasst, wobei der erste Speicher (51) ein nichtflüchtiger Speicher ist, und der zweite Speicher (52) ein flüchtiger Speicher ist;
die MMU (20) konfiguriert ist zum:
Empfangen einer ersten Zugriffsanforderung, die durch den Prozessor (10) gesendet wird, wobei die Zugriffsanforderung eine erste virtuelle Adresse umfasst; und
Übersetzen der ersten virtuellen Adresse in eine erste physische Adresse gemäß einem ersten Seitentabellenpuffer, wobei die erste physische Adresse eine physische Adresse einer ersten großen Seite in dem ersten Speicher (51) ist, wobei der erste Seitentabellenpuffer in einem ersten Übersetzungspuffer (TLB) gespeichert ist, der verwendet wird, um eine Zuordnungsbeziehung zwischen einer virtuellen Adresse und einer physischen Adresse einer großen Seite in dem ersten Speicher (51) aufzuzeichnen, und und die große Seite des ersten Speichers (51) eine Vielzahl von kleinen Seiten umfasst; und
die Speichersteuerung (40) konfiguriert ist zum: Zugreifen auf den ersten Speicher (51) gemäß der ersten physischen Adresse, und in einem Zugriffsvorgang auf den ersten Speicher (51) gemäß der ersten physischen Adresse, wenn bestimmt wird, dass Daten einer ersten kleinen Seite auf der ersten großen Seite zu dem zweiten Speicher (52) migriert werden, Zugreifen auf den zweiten Speicher (52) gemäß einer zweiten physischen Adresse, die auf der ersten kleinen Seite gespeichert ist, wobei die zweite physische Adresse eine physische Adresse einer zweiten kleinen Seite in dem zweiten Speicher (52) ist, die zweite kleine Seite die Daten speichert, die von der ersten kleinen Seite migriert werden, der zweite Speicher (52) eine Vielzahl von kleinen Seiten umfasst, und eine Größe einer kleinen Seite in dem zweiten Speicher (52) kleiner als eine Größe einer großen Seite in dem ersten Speicher (51) ist;
wobei die Speichersteuerung (40) ferner konfiguriert ist zum:
Migrieren der Daten auf der ersten kleinen Seite zu der zweiten kleinen Seite, wenn eine Menge von Zugriffen auf die erste kleine Seite einen spezifizierten Schwellenwert überschreitet; und
Speichern der zweiten physischen Adresse der zweiten kleinen Seite auf der ersten kleinen Seite;
wobei das Computersystem ferner einen zweiten Seitentabellenpuffer umfasst, der in einem zweiten TLB gespeichert ist, und der zweite Seitentabellenpuffer verwendet wird, um eine Zuordnungsbeziehung zwischen einer virtuellen Adresse und einer physischen Adresse einer kleinen Seite in dem zweiten Speicher (52) aufzuzeichnen; und
wobei der Prozessor (10) ferner für konfiguriert ist zum:
Hinzufügen einer Zuordnungsbeziehung zwischen einer zweiten virtuellen Adresse und der zweiten physischen Adresse zu dem zweiten Seitentabellenpuffer, nachdem die Daten auf der ersten kleinen Seite zu der zweiten kleinen Seite migriert werden.

5. Computersystem nach Anspruch 4, wobei die Speichersteuerung (40) ferner konfiguriert ist zum:
Einstellen eines ersten Bezeichners in einer spezifizierten Bitmap, nachdem die Daten der ersten kleinen Seite zu der zweiten kleinen Seite migriert werden, wobei der erste Bezeichner verwendet wird, um anzuzeigen, dass die Daten auf der ersten kleinen Seite migriert wurden.

6. Computersystem nach Anspruch 4, wobei
die MMU (20) ferner konfiguriert ist zum:
Empfangen einer zweiten Zugriffsanforderung, die durch den Prozessor (10) gesendet wird, wobei die zweite Zugriffsanforderung die zweite virtuelle Adresse umfasst; und
Erhalten, gemäß dem zweiten Seitentabellenpuffer, der zweiten physischen Adresse, die die Zuordnungsbeziehung mit der zweiten virtuellen Adresse aufweist; und
die Speichersteuerung (40) ferner konfiguriert ist, um auf den zweiten Speicher (52) gemäß der zweiten physischen Adresse zuzugreifen.

7. Computerlesbares Speichermedium, umfassend eine oder mehrere computerausführbare Anweisungen, wobei, wenn die eine oder die mehreren computerausführbaren Anweisungen durch einen Computer ausgeführt werden, der Computer das Verfahren nach einem der Ansprüche 1 bis 3 durchführt.

## Revendications

1. Procédé d'accès à une mémoire, dans lequel le procédé est appliqué à un système informatique comprenant une mémoire hybride (50), la mémoire hybride (50) comprend une première mémoire (51) et une seconde mémoire (52), la première mémoire (51) est une mémoire non volatile, la seconde mémoire (52) est une mémoire volatile, et le procédé comprend :
la réception d'une première demande d'accès, la demande d'accès comprenant une première adresse virtuelle ;
la traduction de la première adresse virtuelle en une première adresse physique selon un premier tampon de table de pages stocké dans un premier répertoire de pages actives, TLB, du système informatique, la première adresse physique étant une adresse physique d'une première grande page dans la première mémoire (51), et la première grande page comprenant une pluralité de petites pages ; et
dans un processus d'accès à la première mémoire (51) selon la première adresse physique, lorsqu'il est déterminé que les données d'une première petite page de la première grande page ont migré vers la seconde mémoire (52), l'accès à la seconde mémoire (52) selon une seconde adresse physique stockée dans la première petite page, la seconde adresse physique étant une adresse physique d'une seconde petite page dans la seconde mémoire (52), la seconde petite page stockant les données ayant migré depuis la première petite page, la seconde mémoire (52) comprenant une pluralité de petites pages, et une taille d'une petite page dans la seconde mémoire (52) étant inférieure à une taille d'une grande page dans la première mémoire (51) ;
dans lequel la migration des données de la première petite page vers la seconde petite page se produit lorsqu'un nombre d'accès à la première petite page dépasse un seuil spécifié ; et
dans lequel la seconde adresse physique de la seconde petite page est stockée dans la première petite page ; et
dans lequel le système informatique comprend en outre un second tampon de table de pages, et après la migration des données de la première petite page vers la seconde petite page, le procédé comprend en outre :
l'ajout d'une relation de mappage entre une seconde adresse virtuelle et la seconde adresse physique à un second tampon de table de pages stocké dans un second TLB du système informatique, le second tampon de table de pages étant utilisé pour enregistrer une relation de mappage entre une adresse virtuelle et une adresse physique d'une petite page dans la seconde mémoire (52).

2. Procédé d'accès à une mémoire selon la revendication 1, dans lequel après la migration des données de la première petite page vers la seconde petite page, la définition d'un premier identifiant dans une table de bits spécifiée, le premier identifiant étant utilisé pour indiquer la migration des données de la première petite page.

3. Procédé d'accès à une mémoire selon la revendication 1, dans lequel le procédé comprend en outre :
la réception d'une seconde demande d'accès, la seconde demande d'accès comprenant la seconde adresse virtuelle ;
l'obtention, selon le second tampon de table de pages, de la seconde adresse physique qui a la relation de mappage avec la seconde adresse virtuelle ; et
l'accès à la seconde mémoire (52) selon la seconde adresse physique.

4. Système informatique, comprenant un processeur (10), une unité de gestion de mémoire (20), MMU, un contrôleur de mémoire (40) et une mémoire hybride (50), la mémoire hybride (50) comprenant une première mémoire (51) et une seconde mémoire (52), la première mémoire (51) étant une mémoire non volatile, et la seconde mémoire (52) étant une mémoire volatile ;
la MMU (20) étant configurée pour :
recevoir une première demande d'accès envoyée par le processeur (10), la demande d'accès comprenant une première adresse virtuelle ; et
traduire la première adresse virtuelle en une première adresse physique selon un premier tampon de table de pages, la première adresse physique étant une adresse physique d'une première grande page dans la première mémoire (51), le premier tampon de table de pages étant stocké dans un premier répertoire de pages actives, TLB, qui est utilisé pour enregistrer une relation de mappage entre une adresse virtuelle et une adresse physique d'une grande page dans la première mémoire (51), et la grande page de la première mémoire (51) comprenant une pluralité de petites pages ; et
le contrôleur de mémoire (40) étant configuré pour : accéder à la première mémoire (51) selon la première adresse physique, et dans un processus d'accès à la première mémoire (51) selon la première adresse physique, lorsqu'il est déterminé que les données d'une première petite page de la première grande page ont migré vers la seconde mémoire (52), accéder à la seconde mémoire (52) selon une seconde adresse physique stockée dans la première petite page, la seconde adresse physique étant une adresse physique d'une seconde petite page dans la seconde mémoire (52), la seconde petite page stockant les données ayant migré depuis la première petite page, la seconde mémoire (52) comprenant une pluralité de petites pages, et une taille d'une petite page dans la seconde mémoire (52) étant inférieure à la taille d'une grande page dans la première mémoire (51) ;
le contrôleur de mémoire (40) étant en outre configuré pour :
migrer les données de la première petite page vers la seconde petite page lorsqu'un nombre d'accès à la première petite page dépasse un seuil spécifié ; et
stocker la seconde adresse physique de la seconde petite page dans la première petite page ;
le système informatique comprenant en outre un second tampon de table de pages stocké dans un second TLB, et le second tampon de table de pages étant utilisé pour enregistrer une relation de mappage entre une adresse virtuelle et une adresse physique d'une petite page dans la seconde mémoire (52) ; et
le processeur (10) étant en outre configuré pour :
ajouter une relation de mappage entre une seconde adresse virtuelle et la seconde adresse physique au second tampon de table de pages après la migration des données de la première petite page vers la seconde petite page.

5. Système informatique selon la revendication 4, dans lequel le contrôleur de mémoire (40) est en outre configuré pour :
définir un premier identifiant dans une table de bits spécifiée après la migration des données de la première petite page vers la seconde petite page, le premier identifiant étant utilisé pour indiquer la migration des données de la première petite page.

6. Système informatique selon la revendication 4, dans lequel
la MMU (20) est en outre configurée pour :
recevoir une seconde demande d'accès envoyée par le processeur (10), la seconde demande d'accès comprenant la seconde adresse virtuelle ; et
obtenir, selon le second tampon de table de pages, la seconde adresse physique qui a la relation de mappage avec la seconde adresse virtuelle ; et
le contrôleur de mémoire (40) est en outre configuré pour accéder à la seconde mémoire (52) selon la seconde adresse physique.

7. Support de stockage lisible par ordinateur, comprenant une ou plusieurs instructions exécutables par ordinateur, dans lequel lorsque la ou les instructions exécutables par ordinateur sont exécutées par un ordinateur, l'ordinateur effectue le procédé selon l'une quelconque des revendications 1 à 3.
